# EUROPEAN PATENT SPECIFICATION

(11) **EP 4 124 859 B1**
(45) Date of publication and mention of the grant of the patent: **23.04.2025**
(21) Application number: 22187279.9
(22) Date of filing: 27.07.2022
(51) Int. Cl.: G01N 29/04, G01N 29/11, G01N 29/24, G01N 29/265, G01N 29/48, G01N 29/22

(54) **WELD INSPECTION DEVICE, WELDING SYSTEM, AND WELD INSPECTION METHOD**
SCHWEISSPRÜFVORRICHTUNG, SCHWEISSSYSTEM UND SCHWEISSPRÜFVERFAHREN
DISPOSITIF D'INSPECTION DE SOUDURE, SYSTÈME DE SOUDURE ET PROCÉDÉ D'INSPECTION DE SOUDURE

(30) Priority: 30.07.2021 JP 2021125644
(43) Date of publication of application: 01.02.2023
(73) Proprietor: OSAKA UNIVERSITY, Suita-shi Osaka 565-0871 (JP); DAIHEN Corporation, Yodogawa-ku Osaka-shi, Osaka 532-8512 (JP)
(72) Inventor: ASAI, Satoru, Osaka, 565-0871 (JP); NOMURA, Kazufumi, Osaka, 565-0871 (JP); KADOTA, Keiji, Osaka, 532-8512 (JP); ERA, Tetsuo, Osaka, 532-8512 (JP)
(74) Representative: Zacco GmbH

(56) References cited:
- EP-A2- 2 388 573
- JP-A- 2018 119 799

## Description

### BACKGROUND OF THE INVENTION

### Field of the Invention

The present disclosure relates to a weld inspection device, a welding system, and a weld inspection method.

### Description of the Background Art

Ultrasonic testing (UT) is known as a method for nondestructively detecting an internal defect such as a blow hole generated in a weld. However, because an object has a high temperature during welding, it is difficult to apply the method for directly accessing an inspection target surface with a probe in an in-process during welding.

Accordingly, an internal defect detection technique by what is called a "laser ultrasonic technique" is known, in which the inspection target surface is irradiated with laser (generation laser) to generate an ultrasonic wave inside an inspection target and the inspection target is separately irradiated with laser (detection laser) to detect the internal defect of the inspection target in a nondestructive method.

For example, Patent No. 5651533 discloses a weld inspection method for detecting the internal defect of the weld in-process using the laser ultrasonic technique in groove welding of a thick plate. In this weld inspection method, a bead surface is irradiated with the generation laser from above the weld bead, and an ultrasonic wave (scattered wave) reflected by the defect is detected using the detection laser, thereby detecting the internal defect of the weld.

In welding (lap fillet joint) of a thin plate for an automobile, it is difficult to detect the ultrasonic wave (scattered wave) reflected by the internal defect such as a blow hole because of a thin plate thickness (for example, about 1 mm to about 2 mm), and the weld inspection method described in Patent No. 5651533 also targets a groove welding of a thick plate. In addition, regarding UT as well, in JIS (Japanese Industrial Standards) Z 3060 "Method for ultrasonic testing for welds of ferritic steel", the Architectural Institute of Japan, "Standard of ultrasonic testing for welded part in steel structural building" and the like, the applied plate thickness is defined to be greater than or equal to 6 mm, and welding (lap fillet joint) of a thin plate for an automobile is not applied.

European patent application EP 2 388 573 A2 discloses a welding system with a welding mechanism, a reception laser light source, a reception optical mechanism, an interferometer and a data recording/ analysis mechanism. The reception laser light source generates reception laser light so as to irradiate the object to be welded with the reception laser light for the purpose of detecting a reflected ultrasonic wave obtained as a result of reflection of a transmission ultrasonic wave. The reception optical mechanism transmits, during or after welding operation, the reception laser light generated from the reception laser light source to the surface of the object to be welded for irradiation while moving, together with the welding mechanism, relative to the object to be welded and collects laser light scattered reflected at the surface of the object to be welded.

### SUMMARY OF THE INVENTION

An object of the present disclosure is to provide a weld inspection device according to claim 1, a welding system according to claim 3, and a weld inspection method according to claim 10 capable of detecting the internal defect of the weld of the lap fillet joint used for the welding of the thin plate in the in-process method during the welding.

A weld inspection device according to one aspect of the present disclosure is a weld inspection device that inspects a weld of lap fillet joint, and includes first and second laser irradiation devices, a laser interferometer, and a determination device. The first laser irradiation device irradiates the weld of the inspection target after welding with generation laser exciting an ultrasonic wave inside the inspection target. The second laser irradiation device irradiates a predetermined position on the inspection target where the ultrasonic wave, which passes through the weld and is reflected on the lower surface of the base material of the inspection target, is to be detected with detection laser for detecting the ultrasonic wave. The laser interferometer measures interference of reflected light of the detection laser. The determination device determines existence of internal defect of the weld based on the measurement result of the laser interferometer. The first laser irradiation device includes a scanning mechanism that scans the irradiation position of the generation laser in a direction intersecting the welding direction.

In this weld inspection device, the scanning mechanism scans the irradiation position of the generation laser in the direction intersecting the welding direction. Then, the internal defect is detected using not the ultrasonic wave (scattered wave) reflected by the internal defect generated in the weld, but the ultrasonic wave that passes through the weld and is reflected by the lower surface of the base material of the inspection target. Accordingly, the internal defect of the weld of the lap fillet joint used for the welding of a thin plate can be detected.

The determination device may determine that the internal defect is generated in the weld when the attenuation degree of the intensity of the ultrasonic wave detected with the detection laser and the laser interferometer exceeds the threshold.

The welding system according to another aspect of the present disclosure includes an arc welding device including a welding torch, the weld inspection device that inspects the weld of the lap fillet joint formed by the arc welding device, and a welding robot. The welding torch and the first and second laser irradiation devices of the weld inspection device are mounted on a manipulator of the welding robot. The first and second laser irradiation devices are disposed behind the welding torch in the welding direction.

According to the above welding system, the internal defect of the weld of the lap fillet joint by the arc welding device can be detected in-process during the welding with the above weld inspection device mounted on the manipulator of the robot together with the arc welding device.

The welding robot includes a controller that controls the manipulator, and the controller controls the manipulator such that the first and second laser irradiation devices are positioned behind the welding torch in the welding direction during welding by the arc welding device.

The controller may stop the welding by the arc welding device and the operation of the manipulator when the weld inspection device detects the internal defect of the weld.

The controller may execute at least one of the following first processing and second processing when the internal defect of the weld is detected by the weld inspection device. The first processing includes processing of changing a welding condition of the arc welding device. The second processing includes processing of controlling the manipulator such that a welding speed is decreased as compared with a case where the internal defect is not detected.

The welding system may further include an adjustment mechanism and a deformation measurement device. The adjustment mechanism adjusts at least one of the position and the angle of the second laser irradiation device on the manipulator. The deformation measurement device is mounted on the manipulator and measures deformation at a predetermined position of an inspection target due to welding. The adjustment mechanism may adjust at least one of the position and the angle based on the measurement result of the deformation measurement device such that the relative positional relationship between the predetermined position and the second laser irradiation device becomes a predetermined relationship.

The welding system may further include a surface treatment device. The surface treatment device removes an oxide film generated on the inspection target surface by welding by the arc welding device ahead of a predetermined position in the welding direction.

The first laser irradiation device may include a plurality of pulsed laser irradiation devices each of which irradiates the weld with generation pulsed laser. The plurality of pulsed laser irradiation devices may emit the pulsed laser such that the laser irradiation timings are shifted from each other.

A weld inspection method according to still another aspect of the present disclosure is a weld inspection method for inspecting a weld of lap fillet joint, the weld inspection method includes: irradiating the weld of an inspection target after welding with generation laser exciting an ultrasonic wave inside the inspection target; irradiating a predetermined position on the inspection target where the ultrasonic wave is to be detected with detection laser for detecting the ultrasonic wave, the ultrasonic wave passing through the weld and being reflected by a base material lower surface of the inspection target; measuring interference of reflected light of the detection laser with a laser interferometer; and determining existence of an internal defect of the weld based on a measurement result of the laser interferometer. The irradiating the generation laser includes scanning an irradiation position of the generation laser in a direction intersecting a welding direction.

In this weld inspection method, the irradiation position of the generation laser is scanned in a direction intersecting the welding direction. Then, the internal defect is detected using not the ultrasonic wave (scattered wave) reflected by the internal defect generated in the weld, but the ultrasonic wave that passes through the weld and is reflected by the lower surface of the base material of the inspection target. Accordingly, the internal defect of the weld of the lap fillet joint used for the welding of a thin plate can be detected.

The determining may include determining that the internal defect is generated in the weld when the attenuation degree of the intensity of the ultrasonic wave detected with the detection laser and the laser interferometer exceeds a threshold.

The foregoing and other objects, features, aspects and advantages of the present invention will become more apparent from the following detailed description when taken in conjunction with the accompanying drawings.

### BRIEF DESCRIPTION OF THE DRAWINGS

Fig. 1 is a view illustrating a configuration of a weld inspection device according to a first embodiment.
Fig. 2 is a view illustrating a principle of defect detection of a weld by the weld inspection device.
Fig. 3 is a view illustrating the principle of the defect detection of the weld by the weld inspection device.
Fig. 4 is a view illustrating a relationship between an irradiation position of generation laser and an arrival time of an ultrasonic wave at an irradiation position of detection laser.
Fig. 5 is a view illustrating the relationship between the irradiation position of the generation laser and signal intensity of an ultrasonic wave at the irradiation position of the detection laser.
Fig. 6 is a view illustrating a method of determining existence of a defect in the weld.
Fig. 7 is a flowchart illustrating a procedure of a series of processing in the weld inspection device of the first embodiment.
Fig. 8 is an overall configuration diagram illustrating a welding system according to a second embodiment.
Fig. 9 is a view illustrating an image of weld defect detection in process in the welding system in Fig. 8.
Fig. 10 is a flowchart illustrating a procedure of a series of processing in the welding system of the second embodiment.
Fig. 11 is a flowchart illustrating a processing example of a controller when the controller receives a defect detection signal from a control device.
Fig. 12 is a flowchart illustrating a processing example of the controller when the controller receives the defect detection signal from the control device in a modification.
Fig. 13 is a view illustrating a relationship between a deviation amount in a height direction from a focal position and detection sensitivity of a detection laser probe.
Fig. 14 is a view illustrating a relationship between an angular deviation of the detection laser with respect to an inspection target and the detection sensitivity of the detection laser probe.
Fig. 15 is a view illustrating a state in which a base material is deformed due to welding.
Fig. 16 is a view exemplifying the relationship between a surface state of the inspection target and the detection sensitivity of the detection laser by the detection laser probe.
Fig. 17 is an overall configuration diagram illustrating a welding system according to a third embodiment.
Fig. 18 is a plan view illustrating the irradiation position of the generation laser during the welding.
Fig. 19 is a view illustrating a relationship between an irradiation frequency of the generation laser and spatial resolution in a welding direction.
Fig. 20 is a view illustrating a configuration example of a generation laser irradiation device according to a fourth embodiment.
Fig. 21 is a view illustrating oscillation timing of pulsed laser output from each of the generation laser irradiation devices.
Fig. 22 is a view illustrating a configuration example of a generation laser irradiation device according to a modification of the fourth embodiment.

### DESCRIPTION OF THE PREFERRED EMBODIMENTS

With reference to the drawings, embodiments of the present disclosure will be described in detail below. In the drawings, the same or corresponding portion is denoted by the same reference numeral, and the description thereof will not be repeated.

### [First embodiment]

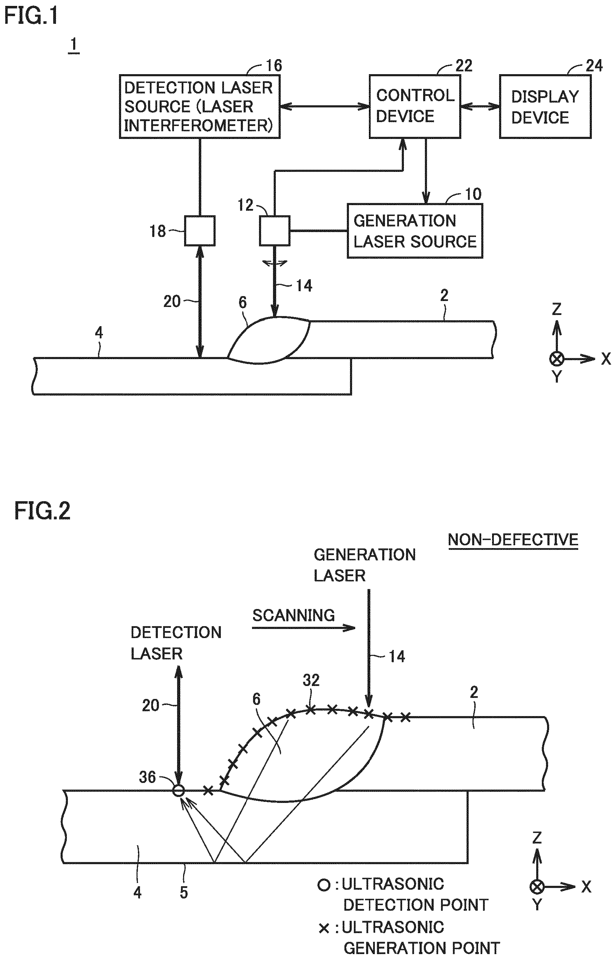

Fig. 1 is a view illustrating a configuration of a weld inspection device according to a first embodiment of the present disclosure. With reference to Fig. 1, a weld inspection device 1 includes a generation laser source 10, a generation laser irradiation device 12, a detection laser source 16, a detection laser probe 18, a control device 22, and a display device 24.

Weld inspection device 1 is used for inspecting a weld 6 in lap fillet joint of a thin plate (base materials 2, 4) such as an automobile steel plate. For example, base materials 2, 4 are galvanized steel plates having a plate thickness of about 1 mm to about 2 mm. In Fig. 1, a Y-direction indicates a welding direction, an X-direction indicates a direction parallel to the base material and orthogonal to the welding direction (Y-direction), and a Z-direction indicates a normal direction of the base material.

Generation laser source 10 generates excitation light generating generation laser 14 in the generation laser irradiation device 12, and outputs the excitation light to generation laser irradiation device 12. For example, generation laser source 10 includes an LD (Laser Diode) power supply.

Generation laser irradiation device 12 receives the excitation light from generation laser source 10, generates generation laser 14 that is the pulse laser, and irradiates weld 6 of the inspection target with the generation laser 14. For example, generation laser irradiation device 12 includes a microchip laser that generates YAG (Yttrium Aluminum Garnet) pulsed laser and a scanning mechanism that can scan the irradiation position of generation laser 14 in the X-direction. For example, the scanning mechanism includes a galvano mirror in which an angle is adjustable and a drive mechanism that drives the galvano mirror.

Detection laser source 16 includes a laser interferometer. Detection laser source 16 generates detection laser 20 (reference light) irradiating base material 4 of the lower plate, and outputs detection laser 20 to detection laser probe 18. In addition, detection laser source 16 receives reflected light from base material 4 of the detection laser 20 with which base material 4 is irradiated from detection laser probe 18, detects interference light including the reference light and the reflected light, and outputs the interference light to control device 22.

Detection laser probe 18 irradiates a predetermined position (ultrasonic detection point) of base material 4 of the lower plate with detection laser 20. In addition, detection laser probe 18 receives the reflected light from base material 4 of detection laser 20 with which base material 4 is irradiated, and outputs the reflected light to detection laser source 16 (laser interferometer).

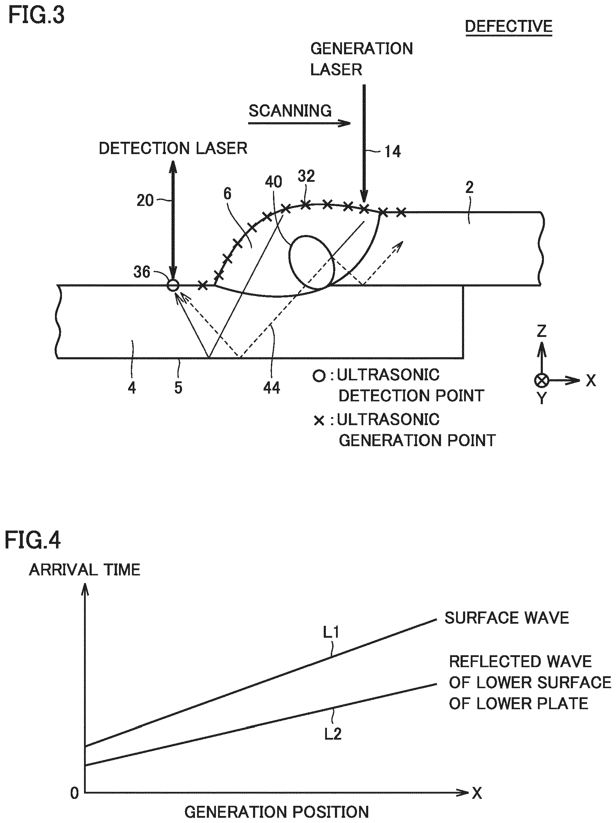

Weld inspection device 1 detects the internal defect of weld 6 using the laser ultrasonic technique. That is, weld 6 of the inspection target is irradiated with the laser (generation laser 14) to generate the ultrasonic wave in the inspection target, and surface vibration corresponding to intensity of the ultrasonic wave at the position (ultrasonic detection point) on base material 4 irradiated with detection laser 20 is detected by the interference light between the reference light of detection laser 20 and the reflected light. The existence of the internal defect of weld 6 is determined based on detection difference between the case where the internal defect does not exist and the case where the internal defect exists in weld 6. A detection principle of the internal defect of the weld by the weld inspection device 1 will be described in detail later with reference to Figs. 2 and 3.

Control device 22 includes a central processing unit (CPU), a memory (random access memory (RAM) and read only memory (ROM)), and an input and output port inputting and outputting various signals (none of which are illustrated). The CPU expands a program stored in the ROM into the RAM, and executes the program. Various pieces of processing executed by control device 22 are described in the program stored in the ROM.

Control device 22 controls generation laser source 10 so as to generate the excitation light generating generation laser 14 in generation laser irradiation device 12. In addition, control device 22 controls generation laser irradiation device 12 such that the irradiation position of generation laser 14 is scanned in the X-direction. In addition, control device 22 receives oscillation timing (timing of pulse irradiation) of generation laser 14 in generation laser irradiation device 12 from generation laser irradiation device 12.

Then, control device 22 receives the interference measurement result of detection laser 20 by the laser interferometer of detection laser source 16 from detection laser source 16, and determines the existence of the internal defect of weld 6 based on the intensity of the ultrasonic wave (the intensity of the surface vibration) at the irradiation position (ultrasonic detection point) of detection laser 20. A method for determining the existence of the internal defect will be described in detail later.

Display device 24 is a display that displays various processing results of control device 22. For example, a measurement screen called a B-scope indicating a measurement result of the ultrasonic wave in the inspection target by the weld inspection device 1 is displayed on display device 24. The B-scope indicates an arrival time and intensity of the ultrasonic wave at the irradiation position (ultrasonic detection point) of the detection laser 20 according to the irradiation position (ultrasonic generation point) of the generation laser 14 scanned in the X-direction. For example, control device 22 and display device 24 are configured of a personal computer (PC). The method for detecting the internal defect of the weld by weld inspection device 1 will be described in detail below.

Figs. 2 and 3 are views illustrating the detection principle of the internal defect of the weld by weld inspection device 1. Fig. 2 illustrates a state where there is no defect in weld 6, and Fig. 3 illustrates a state where the internal defect (such as the blow hole) is generated in weld 6.

With reference to Fig. 2, in weld inspection device 1, the region including weld 6 is irradiated with generation laser 14 (pulse laser) from above (Z-direction), and the ultrasonic wave is excited at the irradiation position of the laser. The generated ultrasonic wave passes through weld 6, is reflected by a lower surface 5 of base material 4 on the lower side, and reaches the upper surface of base material 4. The intensity of the ultrasonic wave at the irradiation position (ultrasonic detection point) of detection laser 20 is measured by measuring micro vibration generated on the surface of base material 4 by the reached ultrasonic wave using detection laser 20 (interference measurement using the laser interferometer).

The irradiation position of generation laser 14 is scanned in the X-direction using the scanning mechanism of generation laser irradiation device 12 (Fig. 1). A point 32 indicated by a "×" mark indicates the irradiation position (ultrasonic generation point) of generation laser 14 that is the pulse laser. After the measurement at a certain irradiation position is completed, the irradiation position of generation laser 14 is scanned to the next position, and the measurement at the irradiation position is performed.

The irradiation position of detection laser 20 is fixed in the X-direction of base material 4. A point 36 indicated by a "o" mark indicates the irradiation position (ultrasonic detection point) of detection laser 20. As the distance between a detection point 36 and a generation point 32 in the X-direction increases, a propagation time of the ultrasonic wave from generation point 32 to detection point 36 increases, and the intensity of the ultrasonic wave (surface minute vibration) at detection point 36 also decreases due to diffusion attenuation.

With reference to Fig. 3, when a defect 40 such as the blowhole exists in weld 6, scattering attenuation is generated at defect 40 in addition to the diffusion attenuation. Therefore, the intensity of an ultrasonic wave 44 reaching detection point 36 is smaller (attenuation becomes large) than when defect 40 does not exist. Consequently, the existence of defect 40 in weld 6 can be determined by capturing an attenuation degree of the ultrasonic wave reaching detection point 36.

Fig. 4 is a view illustrating a relationship between the irradiation position of generation laser 14 and the arrival time of the ultrasonic wave at the irradiation position of detection laser 20. In Fig. 4, the horizontal axis represents the irradiation position (the generation position of the ultrasonic wave) in the X-direction of generation laser 14, and the larger the value, the farther from the irradiation position (ultrasonic detection point) of detection laser 20. The vertical axis represents time from when generation laser 14 is emitted (after the ultrasonic wave is generated at the generation position) to when the ultrasonic wave reaches the irradiation position (ultrasonic detection point) of detection laser 20.

With reference to Fig. 4, a line L1 indicates the arrival time of the ultrasonic wave (surface wave) transmitted through weld 6 and the surface of base material 4. A line L2 indicates the arrival time of the ultrasonic wave (reflected wave) that passes through weld 6 from the generation position of the ultrasonic wave and is reflected by lower surface 5 of base material 4.

The arrival time of the reflected wave is not affected by the existence of defect 40, so that whether the ultrasonic wave detected at the irradiation position (ultrasonic detection point) of detection laser 20 is a surface wave or an ultrasonic wave (reflected wave) reflected on lower surface 5 of base material 4 can be distinguished from the relationship between the generation position and the arrival time of the ultrasonic wave.

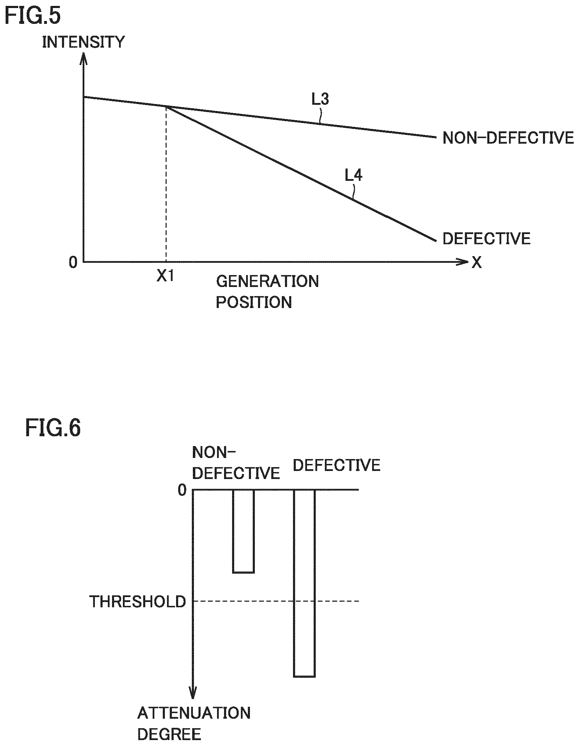

Fig. 5 is a view illustrating the relationship between the irradiation position of generation laser 14 and the intensity of the ultrasonic wave at the irradiation position of the detection laser 20. In Fig. 5, similarly to Fig. 4, the horizontal axis represents the irradiation position (ultrasonic wave generation position) in the X-direction of generation laser 14. The vertical axis indicates the intensity of the reflected wave (line L2) in Fig. 4 at the irradiation position (ultrasonic detection point) of detection laser 20.

With reference to Fig. 5, a line L3 indicates the intensity of the reflected wave (line L2) in Fig. 4 at the ultrasonic detection point when the internal defect does not exist in weld 6. The larger the value of the generation position of the ultrasonic wave (the farther from the ultrasonic detection point), the more the signal intensity is attenuated by the diffusion attenuation.

A line L4 indicates the intensity of the reflected wave (line L2) in Fig. 4 at the ultrasonic detection point when the internal defect (such as the blow hole) exists in weld 6. In a position where the generation position of the ultrasonic wave is larger than X1, the ultrasonic wave (reflected wave) reaching the ultrasonic detection point passes through the internal defect generated in weld 6. At this point, because the scattering attenuation at the internal defect is generated in addition to the diffusion attenuation, the intensity of the ultrasonic wave at the ultrasonic detection point becomes smaller as compared with the case where the internal defect does not exist (line L3). That is, at the ultrasonic detection point, the attenuation degree of the ultrasonic wave when the internal defect is generated becomes larger as compared with the case where the internal defect does not exist.

The B-scope is displayed by changing the concentration according to the intensity of the ultrasonic wave at the ultrasonic detection point for each generation position of the ultrasonic wave for the lines L1, L2 in the graph of Fig. 4. In the B-scope, the arrival time and intensity of the ultrasonic wave at the ultrasonic detection point are displayed on one screen for each generation position of the ultrasonic wave.

Fig. 6 is a view illustrating a method of determining the existence of the defect in weld 6. With reference to Fig. 6, the existence of the internal defect in weld 6 is determined by magnitude of the attenuation degree corresponding to the ultrasonic generation position with respect to the intensity of the ultrasonic wave (the intensity of the ultrasonic wave reflected on lower surface 5 of base material 4) at the irradiation position (ultrasonic detection point) of detection laser 20. That is, it is determined that the defect does not exist when the attenuation degree according to the generation position of the ultrasonic wave is smaller than a predetermined threshold, and it is determined that the internal defect is generated in weld 6 of the inspection target when the attenuation degree exceeds the threshold. The threshold is appropriately set to a value that can distinguish the existence of the internal defect by an evaluation test or the like in advance.

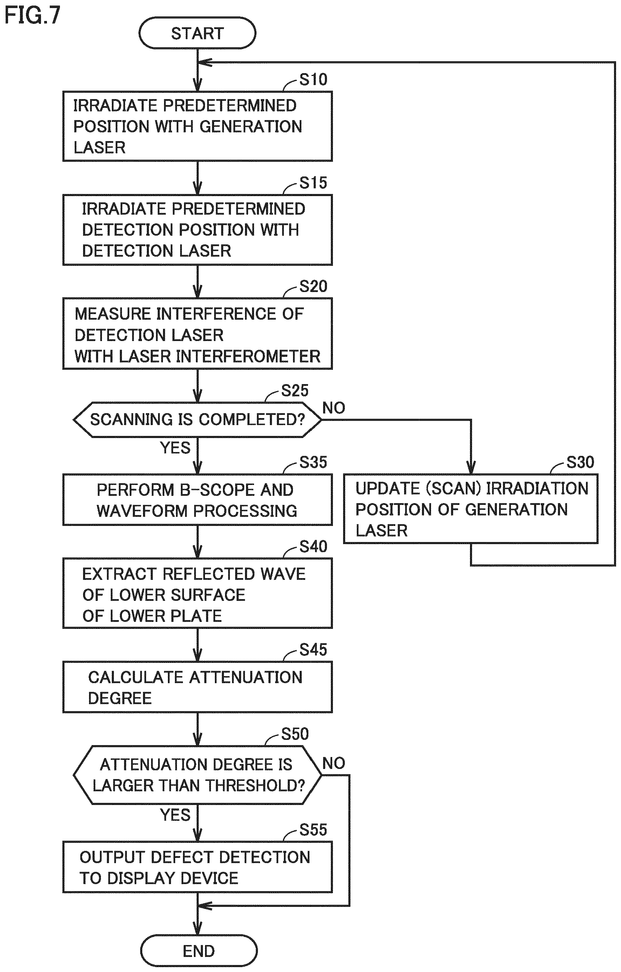

Fig. 7 is a flowchart illustrating a procedure of a series of processing in weld inspection device 1 of the first embodiment. With reference to Fig. 7, first, control device 22 controls the scanning mechanism of generation laser irradiation device 12 so as to irradiate a predetermined position of the inspection target with generation laser 14 (step S10). Each irradiation position of generation laser 14 in one scan is previously determined in the X-direction (for example, 20 points in the region including weld 6), and for example, the scanning mechanism is controlled such that generation laser 14 is first irradiated to a predetermined position closest to the irradiation position of detection laser 20.

In addition, control device 22 controls detection laser source 16 such that a predetermined detection point of the inspection target is irradiated with detection laser 20 (step S20). The irradiation position (ultrasonic detection point) of detection laser 20 is determined at a predetermined position in the X-direction. The irradiation with detection laser 20 may be performed before the irradiation with generation laser 14, or may be started simultaneously with the start of the irradiation with generation laser 14.

Then, detection laser source 16 receives the reflected light of detection laser 20 emitted to base material 4 from detection laser probe 18, and measures interference between the reflected light and detection laser 20 (reference light) emitted to base material 4 using the laser interferometer (step S20).

Subsequently, control device 22 determines whether the scanning of generation laser 14 is completed (step S25). Specifically, it is determined whether the measurement is completed at all predetermined irradiation positions in the X-direction. When the scanning is not completed (NO in step S25), control device 22 updates the irradiation position of generation laser 14 to the next position (step S30). Then, the processing returns to step S10.

When it is determined in step S25 that the scanning for one line is completed (YES in step S25), control device 22 produces the B-scope and executes waveform processing (step S35). Specifically, control device 22 produces the B-scope indicating the relationship between each irradiation position (generation position) in the X-direction of generation laser 14 and the arrival time and intensity of the ultrasonic wave (the ultrasonic wave having passed through weld 6 from the generation position and reflected by lower surface 5 of base material 4) at the irradiation position (detection point) of detection laser 20 for the measurement signal for one scan obtained in the processing of steps S10 to S30.

In producing the B-scope, frequency processing using an appropriate band-pass filter or the like may be performed on the measurement signal obtained in step S20 in order to remove a noise.

Subsequently, the signal of the ultrasonic wave that is reflected by lower surface 5 of the lower plate (base material 4) to reach the ultrasonic detection point is extracted from the produced B-scope (step S40). As described with reference to Fig. 4, in the B-scope, the ultrasonic wave (reflected wave) reflected by lower surface 5 of base material 4 can be distinguished from the surface wave or the like and easily extracted. This extraction work may be performed manually or automatically extracted by control device 22.

When the signal of the ultrasonic wave that is reflected by lower surface 5 of the lower plate (base material 4) to reach the ultrasonic detection point is extracted in step S40, control device 22 calculates the attenuation degree of the ultrasonic wave corresponding to the irradiation position (generation position) of generation laser 14 for the extracted signal (step S45). Specifically, control device 22 calculates a degree of decrease in intensity of the ultrasonic wave according to the generation position. Control device 22 may calculate a root mean square (RMS) value of signal strength for the measurement signal obtained at each generation position, and calculate a degree of decrease in the RMS value according to the generation position.

Then, control device 22 determines whether the attenuation degree calculated in step S45 is larger than the threshold (step S50). As described above, the threshold is appropriately set to a value that can distinguish the existence of the internal defect by the evaluation test in advance. When it is determined that the attenuation degree is larger than the threshold (YES in step S50), control device 22 outputs a signal indicating that the internal defect is detected in weld 6 to display device 24 (step S55).

As described above, in the first embodiment, the internal defect is detected using the ultrasonic wave that passes through weld 6 and is reflected by lower surface 5 of base material 4 of the inspection target, instead of the ultrasonic wave (scattered wave) reflected by the internal defect generated in weld 6. Specifically, when the irradiation position of generation laser 14 is scanned in the X-direction, and the attenuation degree of the ultrasonic wave at the ultrasonic detection point according to the scanning of the irradiation position exceeds the threshold, it is determined that the internal defect is generated in the weld. According to the first embodiment, with such the configuration, the internal defect of weld 6 of the lap fillet joint used for welding of the thin plate can be detected in-process.

### [Second embodiment]

In a second embodiment, a welding system in which a welding device and the weld inspection device are mounted on an automatic welding robot will be described.

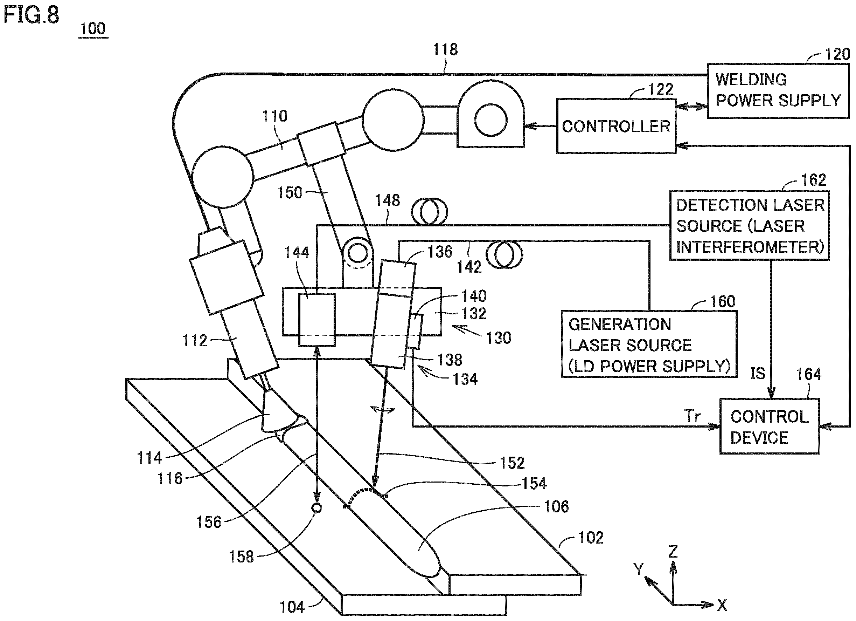

Fig. 8 is an overall configuration diagram illustrating the welding system of the second embodiment. With reference to Fig. 8, a welding system 100 includes a robot manipulator 110, a welding torch 112, a wire 118, a welding power supply 120, and a controller 122.

Robot manipulator 110 is an articulated manipulator, for example, is a six-axis articulated manipulator. Robot manipulator 110 is controlled by controller 122 so as to perform the lap fillet joint of base materials 102, 104 by welding torch 112 at a set welding speed.

Welding torch 112 supplies a welding wire and a shielding gas such as argon gas and carbon dioxide gas) (not illustrated) toward the weld of base materials 102, 104. Welding torch 112 receives supply of a welding current from welding power supply 120 through wire 118, and generates an arc 114 between the tip of the welding wire and the weld of base materials 102, 104.

Instead of the welding wire, a non-consumable electrode (tungsten or the like) may be used while adding a filler (filler material) forming a weld metal. That is, the arc welding by welding torch 112 may be a welding electrode type (such as mag welding or MIG welding) using the welding wire, or may be a non-welding electrode type (such as TIG welding) with addition of the filler.

Welding power supply 120 generates a welding voltage and a welding current in order to perform the arc welding, and outputs the generated welding voltage and welding current to welding torch 112.

Controller 122 controls the operation of robot manipulator 110 and the output of welding power supply 120 such that the lap fillet joint of base materials 102, 104 is performed by welding torch 112 at a set welding speed. At this time, controller 122 controls robot manipulator 110 such that a position of a weld inspection head 130 (described later) constituting the weld inspection device is behind welding torch 112 in the welding direction.

In addition, controller 122 communicates with control device 164 that controls the weld inspection device, and exchanges various signals with a control device 164. For example, controller 122 notifies control device 164 of start, stop, and continuation of welding by welding torch 112. When receiving a defect detection signal indicating that the internal defect of the weld is detected from control device 164, controller 122 stops welding by welding torch 112 or changes a welding condition.

Controller 122 also includes a CPU, memories (RAM and ROM), and an input and output port inputting and outputting various signals (none of them are illustrated). The CPU expands a program stored in the ROM into the RAM, and executes the program. Various pieces of processing executed by controller 122 are described in the program stored in the ROM.

Welding system 100 further includes weld inspection head 130, optical fiber 142, 148, a link 150, a generation laser source 160, a detection laser source 162, and control device 164.

Weld inspection head 130 includes a generation laser irradiation device 134 and a detection laser probe 144. Generation laser irradiation device 134 and detection laser probe 144 are attached to an attachment member 132, and attachment member 132 is connected to robot manipulator 110 by a link 150.

Generation laser irradiation device 134 includes a microchip laser 136, a scanning mechanism 138, and a photodetector 140. For example, microchip laser 136 is a small solid-state laser using a YAG crystal, receives excitation light from generation laser source 160 through optical fiber 142, and generates high-output pulsed laser.

Scanning mechanism 138 includes a mechanism that scans the irradiation position of the pulsed laser generated by microchip laser 136 in the X-direction (a welding width direction orthogonal to the welding direction (Y-direction)). For example, scanning mechanism 138 includes a galvano mirror in which an angle is adjustable and a drive mechanism that drives the galvano mirror. The drive mechanism of scanning mechanism 138 is controlled by control device 164 such that ultrasonic generation point group 154 irradiated with generation laser 152 (pulse laser) includes the entire region in the X-direction of a weld bead 106.

Photodetector 140 detects oscillation of generation laser 152 (pulse laser), and outputs a trigger signal Tr to control device 164 every time the pulse laser is oscillated.

Detection laser probe 144 irradiates ultrasonic detection point 158, which is a predetermined position in the X-direction on base material 104, with detection laser 156 (reference light) received from detection laser source 162 through optical fiber 148. In addition, detection laser probe 144 receives the reflected light from base material 104, which is detection laser 156 with which base material 104 is irradiated, and outputs the reflected light to detection laser source 162 through optical fiber 148.

Detection laser source 162 includes the laser interferometer, and outputs detection laser 156 (reference light) emitted to base material 104 to detection laser probe 144 through optical fiber 148. Then, detection laser source 162 receives the reflected light of detection laser 156 from base material 104 received by detection laser probe 144 from detection laser probe 144, and outputs a detection signal IS of the interference light including the reference light and the reflected light of detection laser 156 to control device 164.

In consideration of in-process defect detection during the welding, the irradiation positions of generation laser 152 and detection laser 156 are desirably close to the welding position (molten pool 116). For example, the irradiation positions of generation laser 152 and detection laser 156 can be set to 20 mm to 30 mm behind molten pool 116 in the welding direction.

Control device 164 measures detection signal IS of the interference light between the reference light and the reflected light of the detection laser 156 for a predetermined time (for example, 10 µs) based on trigger signal Tr from photodetector 140, which indicates the timing at which generation laser 152 (pulse laser) is oscillated. Then, control device 164 measures the intensity of the ultrasonic wave at ultrasonic detection point 158 corresponding to trigger signal Tr from measured detection signal IS of the interference light.

Control device 164 measures the intensity of the ultrasonic wave at ultrasonic detection point 158 as described above while scanning the irradiation position (ultrasonic generation point) of generation laser 152. When the measurement for one scan is completed, control device 164 determines whether the internal defect is generated in the weld (weld bead 106) based on the attenuation degree of the ultrasonic wave (reflected wave) that is reflected by the lower surface of the lower plate (base material 104) to reach detection point 158 by the same method as that in the first embodiment.

In welding system 100 of the second embodiment, when control device 164 determines that the internal defect is generated in the weld, the defect detection signal indicating that the internal defect of the weld is detected is notified from control device 164 to controller 122 on the robot manipulator side, and the welding using welding torch 112 is stopped or the welding condition is changed (such as a change in welding speed or welding current).

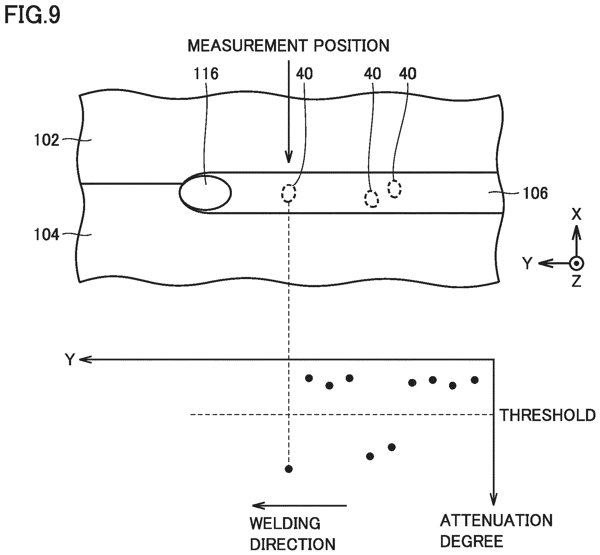

Fig. 9 is a view illustrating an image of weld defect detection in process in welding system 100 in Fig. 8. With reference to Fig. 9, the upper view is a plan view illustrating the inspection target including the weld. Weld bead 106 is formed behind molten pool 116, and a defect 40 indicated by a dotted line is the blow hole or the like generated inside the weld (weld bead 106).

At the position in the Y-direction (welding direction) where the defect is not generated in the weld, the attenuation degree of the ultrasonic wave at ultrasonic detection point 158 according to the scanning of the irradiation position of generation laser 152 (pulse laser) is smaller than the threshold. On the other hand, at the position in the Y-direction where the defect is generated in the weld, the attenuation degree of the ultrasonic wave at ultrasonic detection point 158 according to the scanning of the irradiation position of generation laser 152 is larger than the threshold. In this manner, at which position defect 40 is generated in the weld (weld bead 106) in the welding direction (Y-direction) can be determined in-process during the welding.

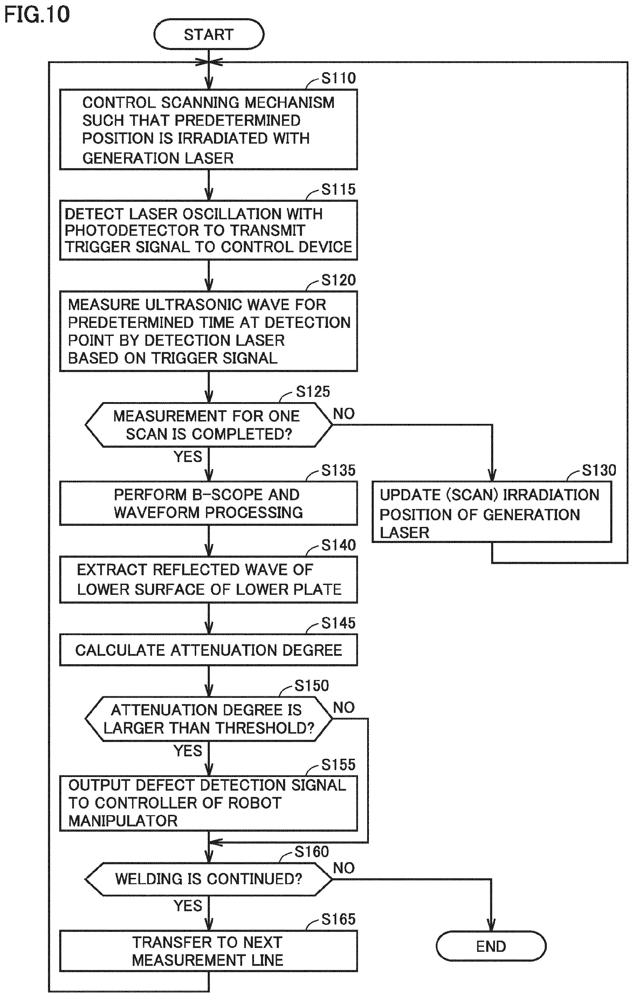

Fig. 10 is a flowchart illustrating a procedure of a series of processing in the welding system of the second embodiment. With reference to Fig. 8 together with Fig. 10, control device 164 controls scanning mechanism 138 so as to irradiate a predetermined position in the X-direction of the welding target with generation laser 152 (step S110). Each irradiation position of generation laser 152 in one scan is previously determined in the X-direction, and in this example, 20 irradiation positions are determined in the region including weld bead 106.

Subsequently, the oscillation (irradiation) of the generation laser 152 (pulse laser) is detected by photodetector 140, and trigger signal Tr indicating the start of the detection of the ultrasonic wave corresponding to the pulse irradiation is transmitted from photodetector 140 to control device 164 (step S115).

Based on trigger signal Tr, control device 164 measures the intensity of the ultrasonic wave at ultrasonic detection point 158 based on the interference light of detection laser 156 acquired by the laser interferometer for a predetermined time (for example, 10 µs) (step S120).

Subsequently, control device 164 determines whether the measurement for one scan of generation laser 152 is completed (step S125). Specifically, it is determined whether the measurement is completed at all predetermined irradiation positions (20 points in this example) in the X-direction. When the measurement for one scan is not completed (NO in step S125), control device 164 updates the irradiation position of generation laser 152 to the next position (step S130). Then, the processing returns to step S110.

When it is determined in step S125 that the measurement for one scan of generation laser 152 is completed (YES in step S125), control device 164 produces the B-scope and executes the waveform processing (step S135). Furthermore, the signal of the ultrasonic wave (reflected wave) that is reflected by the lower surface of the lower plate (base material 104) to reach detection point 158 is extracted from the produced B-scope (step S140). Furthermore, the control device 164 calculates the attenuation degree of the ultrasonic wave corresponding to the irradiation position (generation position) of generation laser 152 for the extracted signal (step S145). Because the pieces of processing in steps S135 to S145 described above are similar to the pieces of processing in steps S35 to S45 in Fig. 7 described in the first embodiment, detailed description will not be repeated.

Subsequently, control device 164 determines whether the attenuation degree calculated in step S145 is larger than the threshold (step S150). This threshold is appropriately set to a value with which the existence of the internal defect can be distinguished by the evaluation test in advance. When it is determined that the attenuation degree is larger than the threshold (YES in step S150), control device 164 outputs the defect detection signal indicating that the defect is detected in the weld (weld bead 106) to controller 122 on the robot manipulator side (step S155). When the attenuation degree is less than or equal to the threshold (NO in step S150), control device 164 transfers the processing to step S160 without executing the processing in step S155.

Subsequently, control device 164 determines whether the welding is continued based on the signal from controller 122 indicating continuation necessity of the welding (step S160). When the welding is continued (YES in step S160), control device 164 transfers to the measurement in the next measurement line (step S165), and returns the processing to step S110.

On the other hand, when it is determined in step S160 that the welding is stopped based on the signal from controller 122 (NO in step S160), control device 164 transfers the processing to the end and ends the series of processing.

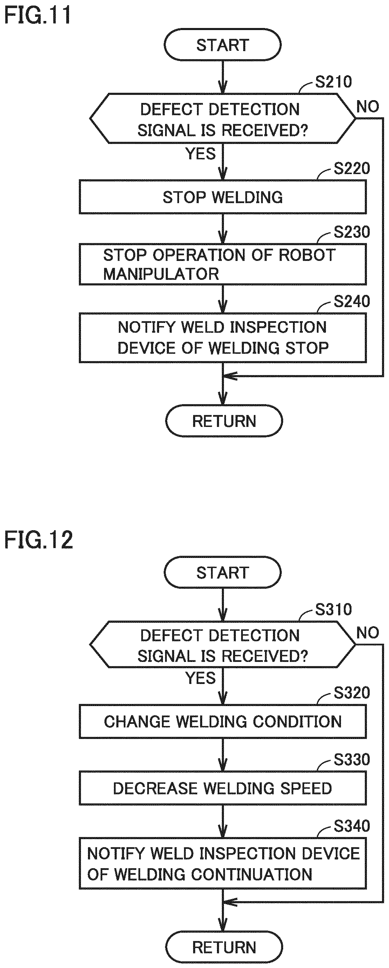

Fig. 11 is a flowchart illustrating a processing example of controller 122 when controller 122 receives the defect detection signal from control device 164. With reference to Fig. 11, controller 122 determines whether the defect detection signal is received from control device 164 (step S210). When the defect detection signal is not received (NO in step S210), controller 122 transfers to the return processing without executing the following series of processing.

When it is determined in step S210 that the defect detection signal is received from control device 164 (YES in step S210), controller 122 stops the welding using welding torch 112 (step S220). Furthermore, controller 122 stops the operation of robot manipulator 110 (step S230).

Then, controller 122 notifies control device 164 (weld inspection device) that the welding is stopped (step S240). That is, in this example, when the inspection of the weld (weld bead 106) is performed in-process during the welding to detect the defect of the weld, the welding is stopped according to the defect detection signal output from control device 164 to controller 122 of the robot manipulator. Then, controller 122 notifies weld inspection device-side control device 164 that the welding is stopped.

As described above, according to the second embodiment, the weld inspection device (weld inspection head 130) mounted on robot manipulator 110 together with welding torch 112 can detect the internal defect of the weld (weld bead 106) by welding torch 112 in-process during the welding. According to the second embodiment, the welding by the welding robot can be stopped when the weld inspection device and the welding robot (robot manipulator 110 and welding torch 112) are linked with each other, and when the internal defect is detected in the weld by the weld inspection device.

### [Modification]

In the second embodiment, the welding is stopped when the weld defect is detected. However, the welding may be continued by changing the welding condition.

Fig. 12 is a flowchart illustrating a processing example of controller 122 when controller 122 receives the defect detection signal from control device 164 in the modification. This flowchart corresponds to Fig. 11 described above.

With reference to Fig. 12, controller 122 determines whether the defect detection signal is received from control device 164 (step S310). When the defect detection signal is not received (NO in step S310), controller 122 transfers to the return processing without executing the following series of processing.

When it is determined in step S310 that the defect detection signal is received from control device 164 (YES in step S310), controller 122 changes the welding condition using welding torch 112 (step S320). The change of the welding condition is previously determined, and for example, the welding current is changed.

In addition, controller 122 decreases the welding speed (step S330). The degree of decrease in welding speed is also previously determined, and the welding speed after the decrease may be defined, or a rate of decrease in welding speed may be defined. Only the processing in any of steps S320 and S330 may be executed.

When the processing in step S320 and/or step S330 is performed, controller 122 notifies control device 164 (weld inspection device) that the welding is continued (step S340). That is, also in this example, when the inspection of the weld (weld bead 106) is performed in-process during the welding to detect the defect of the weld, the welding condition and the welding speed are changed according to the defect detection signal output from control device 164 to controller 122 of the robot manipulator, and the welding is continued. Then, controller 122 notifies weld inspection device-side control device 164 that the welding is continued.

As described above, according to this modification, when the internal defect is detected in the weld by the weld inspection device, the welding condition can be changed or the welding speed can be lowered such that the defect is prevented in the subsequent welding.

### [Third embodiment]

In the defect detection using the laser ultrasonic technique, non-contact vibration measurement is performed using the reflected light from the irradiation surface of detection laser 156. In order to sufficiently capture the reflected light from the inspection target to increase the measurement sensitivity, detection laser probe 144 needs to be disposed at the focal position while facing the irradiation surface of detection laser 156.

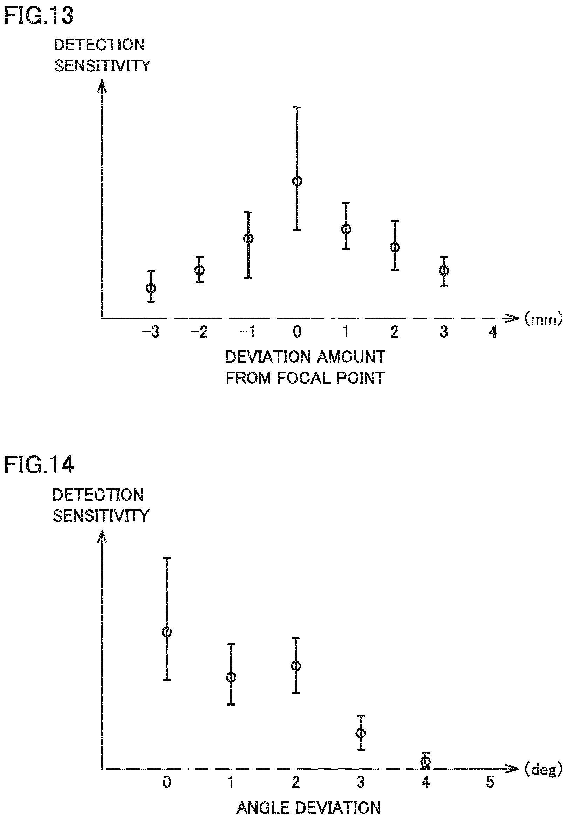

Fig. 13 is a view illustrating a relationship between a deviation amount in the height direction from the focal position and the detection sensitivity of detection laser probe 144. Fig. 13 illustrates the detection sensitivity when detection laser probe 144 faces a stainless mirror surface and when the height of detection laser probe 144 with respect to the stainless mirror surface is changed from the focal position.

As illustrated in Fig. 13, when the deviation in the height direction from the focal position is generated, the detection sensitivity of detection laser probe 144 decreases. That is, when the distance between detection laser probe 144 and the irradiation surface of detection laser 156 (the surface of base material 104) changes, the detection sensitivity of detection laser 156 by detection laser probe 144 decreases.

Fig. 14 is a view illustrating a relationship between an angular deviation with respect to the irradiation surface of detection laser 156 and the detection sensitivity of detection laser probe 144. Fig. 14 illustrates the detection sensitivity when detection laser probe 144 faces the stainless mirror surface and when the angle of detection laser probe 144 with respect to the stainless mirror surface is changed.

As illustrated in Fig. 14, when the angle deviation of detection laser 156 is generated, the detection sensitivity of detection laser probe 144 decreases. That is, when the deviation between the irradiation direction of detection laser 156 and the normal direction of the irradiation surface (surface of base material 104) of detection laser 156 is generated, the detection sensitivity of detection laser 156 by detection laser probe 144 decreases.

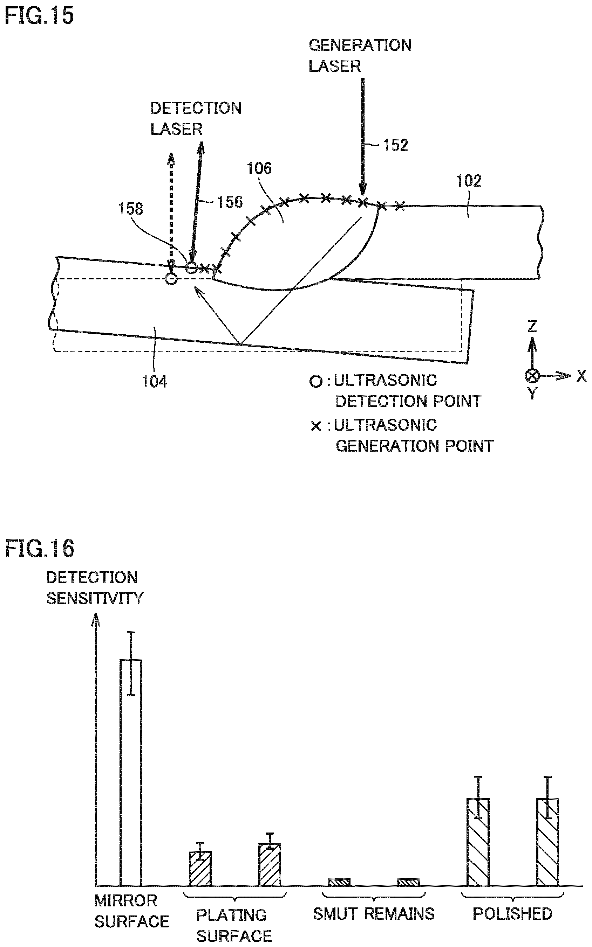

In the welding, a welding object may be deformed due to thermal strain caused by the welding. In particular, in the welding of the thin plate, deformation of the base material due to the welding is assumed as illustrated in Fig. 15. As illustrated in Fig. 15, in the case of deformation of lower base material 104, there is a possibility that the detection sensitivity of detection laser 156 by detection laser probe 144 when the disposition of detection laser probe 144 remains in the initial state.

Accordingly, in the third embodiment, the deformation of the irradiation surface of detection laser 156 is measured during the welding, and the position and angle of detection laser probe 144 are adjusted using the information. Thus, the decrease in the detection sensitivity of detection laser probe 144 is prevented.

The detection sensitivity of detection laser probe 144 also changes depending on the state of the irradiation surface of detection laser 156.

Fig. 16 is a view exemplifying the relationship between the surface state of the inspection target and the detection sensitivity of detection laser probe 144. With reference to Fig. 16, when a smut (oxide film) after the welding adheres to the irradiation surface of detection laser 156, the detection sensitivity of detection laser probe 144 decreases. On the other hand, the detection sensitivity of detection laser probe 144 is improved by polishing the irradiation surface of detection laser 156.

Accordingly, in the third embodiment, a tool polishing ultrasonic detection point 158 irradiated with detection laser 156 is further provided. For example, a brush, laser irradiation, or the like can be used as the tool. Thus, the decrease in the detection sensitivity of detection laser probe 144 is further prevented.

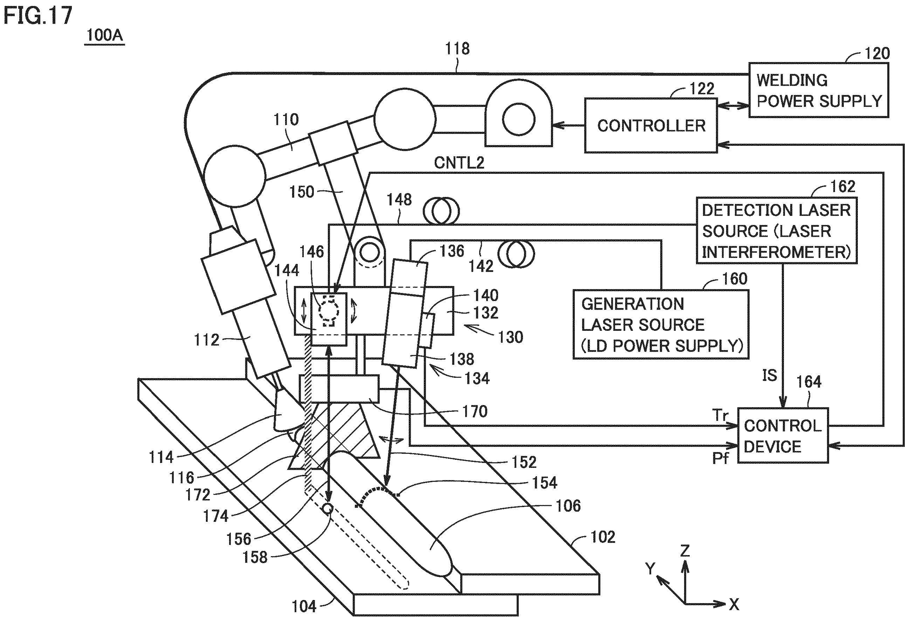

Fig. 17 is an overall configuration diagram illustrating a welding system according to the third embodiment. With reference to Fig. 17, a welding system 100A further includes a laser line scanner 170, a drive mechanism 146, and a surface treatment device 174 in the welding system 100 in Fig. 8.

Laser line scanner 170 is attached to attachment member 132 and measures a surface profile of the welded member after the welding. More specifically, laser line scanner 170 measures the surface profile of base material 104 after the welding at least in an XZ-plane. A signal Pf indicating the measurement result of laser line scanner 170 is output to control device 164.

Drive mechanism 146 is controlled by control device 164, and is able to change the position (Z-direction) and angle (rotation angle on the XZ-plane) of detection laser probe 144 with respect to attachment member 132.

Based on signal Pf from laser line scanner 170, control device 164 controls drive mechanism 146 such that detection laser probe 144 faces base material 104 and such that the position of detection laser probe 144 with respect to base material 104 is the focal position.

Surface treatment device 174 is a tool polishing the surface of base material 104 in ahead the welding direction of ultrasonic detection point 158 irradiated with detection laser 156. For example, a brush can be adopted as surface treatment device 174. Alternatively, the surface treatment device 174 may be configured by a laser irradiation device in which the output is adjusted so as to remove the smut after the welding while leaving the plating layer on the surface of the base material 104.

In the above description, drive mechanism 146 can change the position and angle of detection laser probe 144. However, drive mechanism 146 may change only one of the position and angle of detection laser probe 144. Even when only one of the position and the angle is changed, the decrease in the detection sensitivity of detection laser probe 144 can be prevented.

In the above description, drive mechanism 146 corresponds to the "adjustment mechanism" that adjusts at least one of the position and the angle of detection laser probe 144. Laser line scanner 170 is mounted on robot manipulator 110 and corresponds to the "deformation measurement device" that measures the deformation of the inspection target at ultrasonic detection point 158 irradiated with detection laser 156.

In the above description, welding system 100A includes drive mechanism 146 and laser line scanner 170. However, welding system 100A may include only one of drive mechanism 146 and laser line scanner 170.

As described above, according to the third embodiment, when drive mechanism 146 and/or laser line scanner 170 is provided, the deterioration of the detection sensitivity of detection laser probe 144 due to the deformation of the welding target after the welding or the formation of the smut can be prevented. As a result, the decrease in the detection accuracy of the internal defect of the weld can be prevented.

### [Fourth embodiment]

Because weld inspection head 130 is mounted on robot manipulator 110 together with welding torch 112, weld inspection head 130 also moves in the welding direction together with welding torch 112 during the welding. For this reason, the scanning direction of the irradiation position of generation laser 152 is inclined from the direction (X-direction) orthogonal to the welding direction (Y-direction).

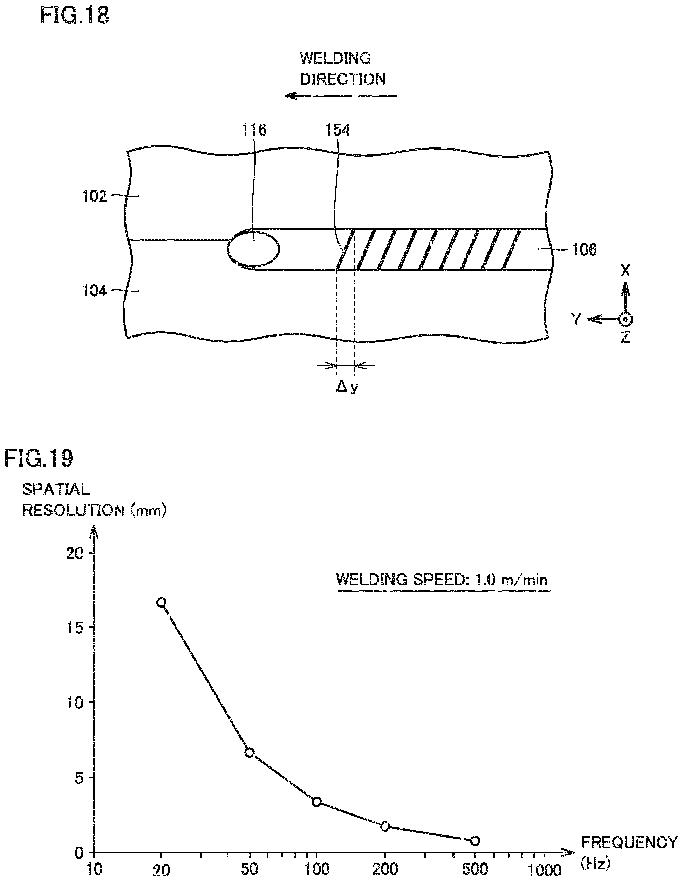

Fig. 18 is a plan view illustrating the irradiation position of the generation laser 152 during the welding. With reference to Fig. 18, ultrasonic generation point group 154 irradiated with generation laser 152 has a width Δy in the welding direction (Y-direction) at the start point and the end point of the scanning. It can be said that Δy indicates the spatial resolution of the weld inspection in the welding direction.

The spatial resolution can be increased (Δy can be decreased) by (i) decreasing the moving speed of weld inspection head 130, (ii) decreasing the number of irradiation points of generation laser 152 (pulse laser) in one scan, and (iii) increasing the irradiation frequency of generation laser 152.

However, the moving speed of weld inspection head 130 is the welding speed and the welding speed is determined by the welding condition, so that lowering the moving speed of weld inspection head 130 is a change of the welding condition and is not easy. Furthermore, reducing the number of irradiation points of generation laser 152 in one scan may reduce the amount of acquired information, which leads to degradation of detection accuracy. Accordingly, desirably the irradiation frequency of generation laser 152 (pulse laser) is increased.

Fig. 19 is a view illustrating a relationship between the irradiation frequency of generation laser 152 and the spatial resolution in the welding direction. Fig. 19 illustrates the spatial resolution (Δy in Fig. 18) when the irradiation frequency of generation laser 152 is changed in the case that the number of irradiation points of generation laser 152 in one scanning is 20 and in the case that the welding speed is 1.0 m/min.

The spatial resolution is Δy = 6.7 mm when the irradiation frequency (pulse frequency) of generation laser 152 is 50 Hz, and the spatial resolution is half thereof when the irradiation frequency is 100 Hz. As described above, the spatial resolution can be increased (Δy can be reduced) by increasing the irradiation frequency of generation laser 152.

It is not easy to increase the oscillation frequency of microchip laser 136 in order to increase the irradiation frequency of generation laser 152. Accordingly, in a fourth embodiment, the irradiation frequency of generation laser 152 is increased using a plurality of microchip lasers by taking advantage of the small size of the microchip lasers.

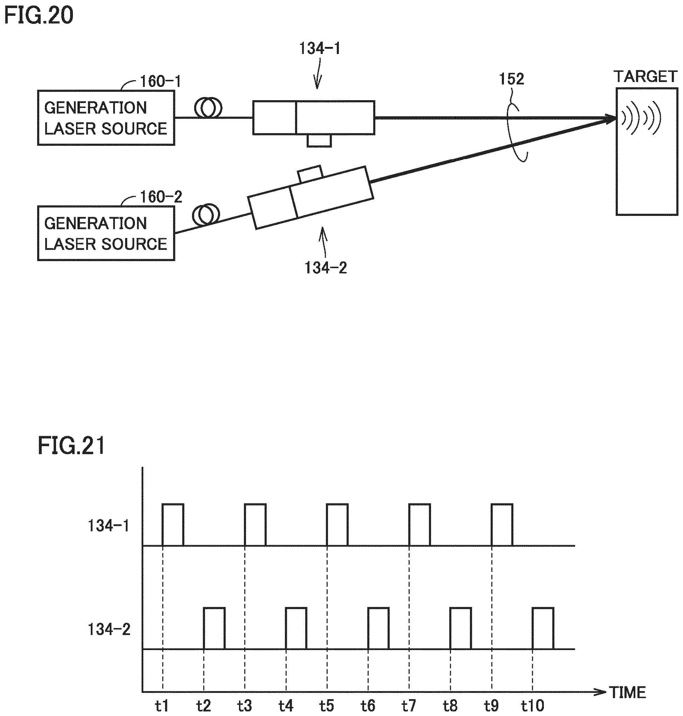

Fig. 20 is a view illustrating a configuration example of the generation laser irradiation device of the fourth embodiment. With reference to Fig. 20, in the illustrated example, generation laser sources 160-1, 160-2 and generation laser irradiation devices 134-1, 134-2 are provided as the generation device of generation laser 152. The configuration of each of generation laser sources 160-1, 160-2 is the same as that of generation laser source 160 described in Fig. 8, and the configuration of each of the generation laser irradiation devices 134-1, 134-2 is the same as that of generation laser irradiation device 134 described in Fig. 8.

Each of generation laser irradiation devices 134-1, 134-2 receives the excitation light from generation laser sources 160-1, 160-2 through an optical fiber. Each of generation laser irradiation devices 134-1, 134-2 generates high-output pulsed laser. While the galvano mirror is controlled such that the irradiation positions of the pulsed laser output from generation laser irradiation device 134-1 and the pulsed laser output from generation laser irradiation device 134-2 are the same, the oscillation timings are shifted from each other.

Fig. 21 is a view illustrating the oscillation timing of the pulsed laser output from each of the generation laser irradiation devices 134-1, 134-2. With reference to Fig. 21, the oscillation timing of the pulsed laser is adjusted in each of generation laser irradiation devices 134-1, 134-2 such that the oscillation timings of the pulsed laser output from each of generation laser irradiation devices 134-1, 134-2 are shifted from each other by a half period. Thus, the number of times of the ultrasonic wave generated at the irradiation position of generation laser 152 can be substantially doubled. For example, when the frequency of the pulsed laser output from each of generation laser irradiation devices 134-1, 134-2 is 100 Hz, the frequency of generation laser 152 with which the target is irradiated can be set to 200 Hz.

Other configurations of the welding system according to the fourth embodiment are the same as those of welding system 100 in Fig. 8 or welding system 100A in Fig. 17.

As described above, according to the fourth embodiment, the detection accuracy of the internal defect of the weld can be enhanced by enhancing the spatial resolution of the weld inspection in the welding direction.

### (Modification of fourth embodiment)

In the fourth embodiment, the number of times of the ultrasonic wave generated at the irradiation position of the generation laser 152 is doubled by the plurality of generation laser irradiation devices 134-1, 134-2, but the control of the scanning mechanism (galvanometer mirror) and the management of the trigger by the photodetector are required for a plurality of devices, and the configuration of the entire device may be complicated. Accordingly, the control of the scanning mechanism and the management of the trigger by the photodetector can be integrated into one by configuring the plurality of microchip lasers to share the optical system (scanning mechanism).

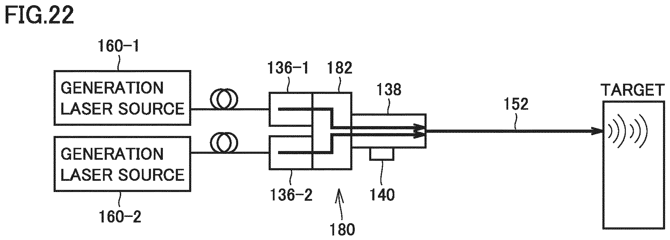

Fig. 22 is a view illustrating a configuration example of a generation laser irradiation device according to a modification of the fourth embodiment. With reference to Fig. 22, in this modification, a generation laser irradiation device 180 is provided instead of generation laser irradiation devices 134-1, 134-2 in Fig. 20. Generation laser irradiation device 180 includes microchip lasers 136-1, 136-2, a condensing mechanism 182, scanning mechanism 138, and photodetector 140. The configuration of each of microchip lasers 136-1, 136-2 is the same as microchip laser 136 in Fig. 8.

Microchip laser 136-1, 136-2 receives the excitation light from generation laser sources 160-1, 160-2 through the optical fiber. Then, each of the microchip lasers 136-1, 136-2 generates high-output pulsed laser, and outputs the pulsed laser to condensing mechanism 182. The oscillation timings of the pulsed laser output from the microchip laser 136-1 and the pulsed laser output from microchip laser 136-2 are shifted from each other. More specifically, as illustrated in Fig. 21, the oscillation timing of the pulsed laser is adjusted in each of microchip lasers 136-1, 136-2 such that the oscillation timings of the pulse laser output from each of microchip lasers 136-1, 136-2 are shifted from each other by a half period.

Condensing mechanism 182 condenses the pulsed laser output from microchip laser 136-1 and the pulsed laser output from microchip laser 136-2, and outputs the light to scanning mechanism 138. Condensing mechanism 182 includes the galvanometer mirror in which the angle is adjusted so as to condense the pulsed laser output from each of microchip lasers 136-1, 136-2 to output the light to scanning mechanism 138.

Photodetector 140 detects the oscillation of generation laser 152 (pulsed laser) output from scanning mechanism 138, and outputs trigger signal Tr to control device 164 every time the pulsed laser is oscillated. Because scanning mechanism 138 and photodetector 140 have been described with reference to Fig. 8, the description thereof will not be repeated.

In this modification, when light condensing mechanism 182 is provided, scanning mechanism 138 and photodetector 140 are shared by the plurality of microchip lasers 136-1, 136-2, so that the configuration of the entire device can be simplified as compared with the fourth embodiment.

Although the embodiments of the present disclosure have been described, it should be considered that the disclosed embodiments are an example in all respects and not restrictive. The technical scope of the present disclosure is indicated by the claims, and it is intended that all modifications within the meaning and scope of the claims are included in the present disclosure.

## Claims

1. A weld inspection device (1) for inspecting a weld (6) of lap fillet joint, the weld inspection device comprising:
a first laser irradiation device (12) configured to irradiate the weld of an inspection target after welding with generation laser beam (14) exciting an ultrasonic wave inside the inspection target, wherein the inspection target comprises two base materials (2, 4) joint by the weld (6) of a lap fillet joint;
a second laser irradiation device (18) configured to irradiate a predetermined position on the inspection target where the ultrasonic wave is to be detected with detection laser beam (20) for detecting the ultrasonic wave, the ultrasonic wave passing through the weld and being reflected by a base material lower surface (5) of the inspection target, wherein the second laser irradiation device (18) is configured to irradiate one of the two base materials (2, 4);
a laser interferometer (16) configured to measure interference of reflected light of the detection laser; and
a determination device (22) configured to determine existence of an internal defect of the weld based on a measurement result of the laser interferometer,
wherein the first laser irradiation device (12) includes a scanning mechanism configured to scan an irradiation position of the generation laser in a direction intersecting a welding direction.

2. The weld inspection device according to claim 1, wherein the determination device is configured to determine that the internal defect is generated in the weld when an attenuation degree of intensity of the ultrasonic wave detected with the detection laser and the laser interferometer exceeds a threshold.

3. A welding system comprising:
an arc welding device including a welding torch (112);
a weld inspection device (130) according to claim 1 or 2 to inspect the weld of the lap fillet joint formed by the arc welding device; and
a welding robot (110),
wherein the welding torch and the first and second laser irradiation devices (134, 144) of the weld inspection device are mounted on a manipulator of the welding robot, and
the first and second laser irradiation devices are disposed behind the welding torch in the welding direction.

4. The welding system according to claim 3, wherein
the welding robot includes a controller (122) configured to control the manipulator, and
the controller is configured to control the manipulator such that the first and second laser irradiation devices are positioned behind the welding torch in the welding direction during welding by the arc welding device.

5. The welding system according to claim 3, wherein
the welding robot includes a controller (122) configured to control the arc welding device and the manipulator, and
the controller is configured to stop welding by the arc welding device and operation of the manipulator when the internal defect of the weld is detected by the weld inspection device.

6. The welding system according to claim 3, wherein
the welding robot includes a controller (122) configured to control the arc welding device and the manipulator,
the controller is configured to execute at least one of first processing and second processing when the internal defect of the weld is detected by the weld inspection device,
the first processing includes processing of changing a welding condition of the arc welding device, and
the second processing includes processing of controlling the manipulator such that a welding speed is decreased as compared with a case where the internal defect is not detected.

7. The welding system according to any one of claims 3 to 6, further comprising:
an adjustment mechanism (146) that is configured to adjust at least one of a position and an angle of the second laser irradiation device on the manipulator; and
a deformation measurement device (170) configured to measure deformation of the inspection object at the predetermined position due to welding, the deformation measurement device being mounted on the manipulator,
wherein the adjustment mechanism is configured to adjust at least one of the position and the angle based on a measurement result of the deformation measurement device such that a relative positional relationship between the predetermined position and the second laser irradiation device becomes a predetermined relationship.

8. The welding system according to any one of claims 3 to 7, further comprising a surface treatment device (174) configured to remove an oxide film formed on a surface of the inspection target by welding by the arc welding device ahead of the predetermined position in the welding direction.

9. The welding system according to any one of claims 3 to 8, wherein
the first laser irradiation device includes a plurality of pulsed laser irradiation devices (134-1, 134-2) each of which is configured to irradiate the weld with generation pulsed laser, and
the plurality of pulsed laser irradiation devices is configured to emit the pulsed laser such that laser irradiation timings are shifted from each other.

10. A weld inspection method for inspecting a weld (6) of lap fillet joint, the weld inspection method comprising:
irradiating the weld of an inspection target after welding with generation laser beam (14) exciting an ultrasonic wave inside the inspection target, wherein the inspection target comprises two base materials (2, 4) joint by the weld (6) of a lap fillet joint;
irradiating a predetermined position on the inspection target where the ultrasonic wave is to be detected with detection laser beam (20) for detecting the ultrasonic wave, the ultrasonic wave passing through the weld and being reflected by a base material lower surface (5) of the inspection target, wherein irradiating a predetermined position on the inspection target comprises irradiating one of the two base materials (2, 4);
measuring interference of reflected light of the detection laser with a laser interferometer (16); and
determining existence of an internal defect of the weld based on a measurement result of the laser interferometer,
wherein the irradiating the generation laser includes scanning an irradiation position of the generation laser in a direction intersecting a welding direction.

11. The weld inspection method according to claim 10, wherein the determining includes determining that the internal defect is generated in the weld when an attenuation degree of intensity of the ultrasonic wave detected with the detection laser and the laser interferometer exceeds a threshold.

## Patentansprüche

1. Schweißprüfvorrichtung (1) zum Prüfen einer Schweißnaht (6) einer Überlappungsverbindung, wobei die Schweißprüfvorrichtung Folgendes umfasst:
eine erste Laserbestrahlungsvorrichtung (12), die dazu konfiguriert ist, die Schweißnaht eines Prüfziels nach dem Schweißen mit einem Generationslaserstrahl (14), der eine Ultraschallwelle im Inneren des Prüfziels anregt, zu bestrahlen, wobei das Prüfziel zwei Grundmaterialien (2, 4) umfasst, die durch die Schweißnaht (6) einer Überlappungsverbindung verbunden sind;
eine zweite Laserbestrahlungsvorrichtung (18), die dazu konfiguriert ist, eine vorbestimmte Position auf dem Prüfziel zu bestrahlen, wo die Ultraschallwelle mit einem Detektionslaserstrahl (20) zum Detektieren der Ultraschallwelle zu detektieren ist, wobei die Ultraschallwelle durch die Schweißnaht verläuft und von einer unteren Oberfläche (5) des Grundmaterials des Prüfziels reflektiert wird, wobei die zweite Laserbestrahlungsvorrichtung (18) dazu konfiguriert ist, eines der beiden Grundmaterialien (2, 4) zu bestrahlen;
ein Laserinterferometer (16), das dazu konfiguriert ist, Interferenz reflektierten Lichts des Detektionslasers zu messen; und
eine Bestimmungsvorrichtung (22), die dazu konfiguriert ist, die Existenz eines internen Defekts der Schweißnaht basierend auf einem Messergebnis des Laserinterferometers zu bestimmen, wobei die erste Laserbestrahlungsvorrichtung (12) einen Scan-Mechanismus beinhaltet, der dazu konfiguriert ist, eine Bestrahlungsposition des Generationslasers in eine Richtung zu scannen, die eine Schweißrichtung schneidet.

2. Schweißprüfvorrichtung nach Anspruch 1, wobei die Bestimmungsvorrichtung dazu konfiguriert ist, zu bestimmen, dass der interne Defekt in der Schweißnaht erzeugt wird, wenn ein Dämpfungsgrad der Intensität der mit dem Detektionslaser und dem Laserinterferometer detektierten Ultraschallwelle einen Schwellwert übersteigt.

3. Schweißsystem umfassend:
eine Lichtbogenschweißvorrichtung, die einen Schweißbrenner (112) beinhaltet;
eine Schweißprüfvorrichtung (130) nach Anspruch 1 oder 2 zum Überprüfen der Schweißnaht der von der Lichtbogenschweißvorrichtung gebildeten Überlappungsverbindung; und
einen Schweißroboter (110),
wobei der Schweißbrenner und die erste und die zweite Laserbestrahlungsvorrichtung (134, 144) der Schweißprüfvorrichtung an einem Manipulator des Schweißroboters montiert sind, und
wobei die erste und die zweite Laserbestrahlungsvorrichtung hinter dem Schweißbrenner in die Schweißrichtung angeordnet sind.

4. Schweißsystem nach Anspruch 3, wobei
der Schweißroboter einen Regler (122) beinhaltet, der dazu konfiguriert ist, den Manipulator zu steuern, und
der Regler dazu konfiguriert ist, den Manipulator derart zu steuern, dass die erste und die zweite Laserbestrahlungsvorrichtung während des Schweißens mit der Lichtbogenschweißvorrichtung hinter dem Schweißbrenner in die Schweißrichtung positioniert sind.

5. Schweißsystem nach Anspruch 3, wobei
der Schweißroboter einen Regler (122) beinhaltet, der dazu konfiguriert ist, die Lichtbogenschweißvorrichtung und den Manipulator zu steuern, und
der Regler dazu konfiguriert ist, das Schweißen mit der Lichtbogenschweißvorrichtung und den Betrieb des Manipulators zu stoppen, wenn der interne Defekt der Schweißnaht von der Schweißprüfvorrichtung detektiert wird.

6. Schweißsystem nach Anspruch 3, wobei
der Schweißroboter einen Regler (122) beinhaltet, der dazu konfiguriert ist, die Lichtbogenschweißvorrichtung und den Manipulator zu steuern,
der Regler dazu konfiguriert ist, mindestens eines von erstem Bearbeiten und zweitem Bearbeiten auszuführen, wenn der interne Defekt der Schweißnaht von der Schweißprüfvorrichtung detektiert wird,
das erste Bearbeiten Bearbeiten zum Ändern einer Schweißbedingung der Lichtbogenschweißvorrichtung beinhaltet und
das zweite Bearbeiten Bearbeiten zum Steuern des Manipulators derart umfasst, dass eine Schweißgeschwindigkeit im Vergleich zu einem Fall, bei dem kein interner Defekt detektiert wird, verringert wird.

7. Schweißsystem nach einem der Ansprüche 3 bis 6 ferner umfassend:
einen Einstellmechanismus (146), der dazu konfiguriert ist, mindestens eines von einer Position und/oder einem Winkel einer zweiten Laserbestrahlungsvorrichtung an dem Manipulator einzustellen; und
eine Verformungsmessvorrichtung (170), die dazu konfiguriert ist, eine Verformung des Prüfobjekts an der vorbestimmten Position aufgrund des Schweißens zu messen, wobei die Verformungsmessvorrichtung an dem Manipulator montiert ist,
wobei der Einstellmechanismus dazu konfiguriert ist, mindestens eines von der Position und/oder dem Winkel basierend auf einem Messergebnis der Verformungsmessvorrichtung derart einzustellen, dass eine relative Positionsbeziehung zwischen der vorbestimmten Position und der zweiten Laserbestrahlungsvorrichtung zu einer vorbestimmten Beziehung wird.

8. Schweißsystem nach einem der Ansprüche 3 bis 7 ferner umfassend eine Oberflächenbehandlungsvorrichtung (174), die dazu konfiguriert ist , einen Oxidfilm zu entfernen, der sich durch das Schweißen mit der Lichtbogenschweißvorrichtung vor der vorbestimmten Position in die Schweißrichtung auf einer Oberfläche des Prüfziels gebildet hat.

9. Schweißsystem nach einem der Ansprüche 3 bis 8, wobei
die erste Laserbestrahlungsvorrichtung eine Vielzahl von gepulsten Laserbestrahlungsvorrichtungen (134-1, 134-2) beinhaltet, von denen jede dazu konfiguriert ist, die Schweißnaht mit einem gepulsten Generationslaser zu bestrahlen, und
die Mehrzahl der gepulsten Laserbestrahlungsvorrichtungen dazu konfiguriert ist, den gepulsten Laser derart zu emittieren, dass Bestrahlungszeitpunkte der Laser gegeneinander verschoben sind.

10. Schweißprüfverfahren zum Prüfen einer Schweißnaht (6) einer Überlappungsverbindung, wobei das Schweißprüfverfahren Folgendes umfasst:
Bestrahlen der Schweißnaht eines Prüfziels nach dem Schweißen mit einem Generationslaserstrahl (14), der eine Ultraschallwelle im Innern des Prüfziels anregt, wobei das Prüfziel zwei Grundmaterialien (2, 4) umfasst, die durch die Schweißnaht (6) einer Überlappungsverbindung verbunden sind;
Bestrahlen einer vorbestimmten Position auf dem Prüfziel, wo die Ultraschallwelle mit einem Detektionslaserstrahl (20) zum Detektieren der Ultraschallwelle zu detektieren ist, wobei die Ultraschallwelle durch die Schweißnaht verläuft und von einer unteren Oberfläche (5) des Grundmaterials des Prüfziels reflektiert wird, wobei das Bestrahlen einer vorbestimmten Position auf dem Prüfziel Bestrahlen eines der beiden Grundmaterialien (2, 4) umfasst;
Messen von Interferenz reflektierten Lichts des Detektionslasers mit einem Laserinterferometer (16); und
Bestimmen der Existenz eines internen Defekts der Schweißnaht basierend auf einem Messergebnis des Laserinterferometers,
wobei das Bestrahlen des Generationslasers Scannen einer Bestrahlungsposition des Generationslasers in eine Richtung beinhaltet, die eine Schweißrichtung schneidet.

11. Schweißprüfverfahren nach Anspruch 10, wobei das Bestimmen Bestimmen beinhaltet, dass der interne Defekt in der Schweißnaht erzeugt wird, wenn ein Dämpfungsgrad der Intensität der mit dem Detektionslaser und dem Laserinterferometer detektierten Ultraschallwelle einen Schwellwert übersteigt.

## Revendications

1. Dispositif d'inspection de soudure (1) pour inspecter une soudure (6) d'un joint à recouvrement, le dispositif d'inspection de soudure comprenant :
un premier dispositif d'irradiation laser (12) configuré pour irradier la soudure d'une cible d'inspection après la soudure avec un faisceau laser de génération (14) excitant une onde ultrasonore à l'intérieur de la cible d'inspection, dans lequel la cible d'inspection comprenant deux matériaux de base (2, 4) joints par la soudure (6) d'un joint à recouvrement ;
un second dispositif d'irradiation laser (18) configuré pour irradier une position prédéterminée sur la cible d'inspection où l'onde ultrasonore doit être détectée avec un faisceau laser de détection (20) pour détecter l'onde ultrasonore, l'onde ultrasonore traversant la soudure et étant réfléchie par une surface inférieure du matériau de base (5) de la cible d'inspection, dans lequel le second dispositif d'irradiation laser (18) étant configuré pour irradier l'un des deux matériaux de base (2, 4) ;
un interféromètre laser (16) configuré pour mesurer l'interférence de la lumière réfléchie du laser de détection ; et
un dispositif de détermination (22) configuré pour déterminer l'existence d'un défaut interne de la soudure sur la base d'un résultat de mesure de l'interféromètre laser, dans lequel le premier dispositif d'irradiation laser (12) comprend un mécanisme de balayage configuré pour balayer une position d'irradiation du laser de génération dans une direction croisant une direction de soudure.

2. Dispositif d'inspection de soudure selon la revendication 1, dans lequel le dispositif de détermination est configuré pour déterminer que le défaut interne est généré dans la soudure lorsqu'un degré d'atténuation de l'intensité de l'onde ultrasonore détectée avec le laser de détection et l'interféromètre laser dépasse un seuil.

3. Système de soudure comprenant :
un dispositif de soudure à l'arc comprenant une torche de soudure (112) ;
un dispositif d'inspection de soudure (130) selon la revendication 1 ou 2 pour inspecter la soudure du joint à recouvrement formé par le dispositif de soudure à l'arc ; et
un robot de soudure (110), dans lequel la torche de soudure et les premier et second dispositifs d'irradiation laser (134, 144) du dispositif d'inspection de soudure sont montés sur un manipulateur du robot de soudure, et
les premier et second dispositifs d'irradiation laser sont disposés derrière la torche de soudure dans la direction de soudure.

4. Système de soudure selon la revendication 3, dans
lequel le robot de soudure comprend un dispositif de commande (122) configuré pour commander le manipulateur, et
le dispositif de commande est configuré pour commander le manipulateur de telle sorte que les premier et second dispositifs d'irradiation laser soient positionnés derrière la torche de soudure dans la direction de soudure pendant la soudure par le dispositif de soudure à l'arc.

5. Système de soudure selon la revendication 3, dans
lequel le robot de soudure comprend un dispositif de commande (122) configuré pour commander le dispositif de soudure à l'arc et le manipulateur, et
le dispositif de commande est configuré pour arrêter la soudure par le dispositif de soudure à l'arc et le fonctionnement du manipulateur lorsque le défaut interne de la soudure est détecté par le dispositif d'inspection de soudure.

6. Système de soudure selon la revendication 3, dans
lequel le robot de soudure comprend un dispositif de commande (122) configuré pour commander le dispositif de soudure à l'arc et le manipulateur,
le dispositif de commande étant configuré pour exécuter au moins l'un parmi un premier traitement et un second traitement lorsque le défaut interne de la soudure est détecté par le dispositif d'inspection de soudure,
le premier traitement comprend un traitement de modification d'une condition de soudure du dispositif de soudure à l'arc, et
le second traitement comprend un traitement de commande du manipulateur de telle sorte qu'une vitesse de soudure soit diminuée par rapport à un cas où le défaut interne n'est pas détecté.

7. Système de soudure selon l'une quelconque des revendications 3 à 6, comprenant en outre :
un mécanisme de réglage (146) qui est configuré pour régler au moins l'un parmi une position et un angle du second dispositif d'irradiation laser sur le manipulateur ; et
un dispositif de mesure de déformation (170) configuré pour mesurer la déformation de l'objet d'inspection à la position prédéterminée en raison de la soudure, le dispositif de mesure de déformation étant monté sur le manipulateur,
dans lequel le mécanisme de réglage étant configuré pour régler au moins l'un parmi la position et l'angle sur la base d'un résultat de mesure du dispositif de mesure de déformation de telle sorte qu'une relation de position relative entre la position prédéterminée et le second dispositif d'irradiation laser devienne une relation prédéterminée.

8. Système de soudure selon l'une quelconque des revendications 3 à 7, comprenant en outre un dispositif de traitement de surface (174) configuré pour éliminer un film d'oxyde formé sur une surface de la cible d'inspection par soudure par le dispositif de soudure à l'arc en avant de la position prédéterminée dans la direction de soudure.

9. Système de soudure selon l'une quelconque des revendications 3 à 8, dans lequel
le premier dispositif d'irradiation laser comprend une pluralité de dispositifs d'irradiation laser pulsé (134-1, 134-2) dont chacun est configuré pour irradier la soudure avec un laser pulsé de génération, et
la pluralité de dispositifs d'irradiation laser pulsé étant configurée pour émettre le laser pulsé de telle sorte que les temps d'irradiation laser sont décalés les uns par rapport aux autres.

10. Procédé d'inspection de soudure pour inspecter une soudure (6) d'un joint à recouvrement, le procédé d'inspection de soudure comprenant :
l'irradiation de la soudure d'une cible d'inspection après la soudure avec un faisceau laser de génération (14) excitant une onde ultrasonore à l'intérieur de la cible d'inspection, dans lequel la cible d'inspection comprend deux matériaux de base (2, 4) joints par la soudure (6) d'un joint à recouvrement;
l'irradiation d'une position prédéterminée sur la cible d'inspection où l'onde ultrasonore doit être détectée avec un faisceau laser de détection (20) pour détecter l'onde ultrasonore, l'onde ultrasonore traversant la soudure et étant réfléchie par une surface inférieure (5) du matériau de base de la cible d'inspection, dans lequel l'irradiation d'une position prédéterminée sur la cible d'inspection comprend l'irradiation de l'un des deux matériaux de base (2, 4) ;
la mesure de l'interférence de la lumière réfléchie du laser de détection avec un interféromètre laser (16) ; et
la détermination de l'existence d'un défaut interne de la soudure sur la base d'un résultat de mesure de l'interféromètre laser,
dans lequel l'irradiation du laser de génération comprend le balayage d'une position d'irradiation du laser de génération dans une direction croisant une direction de soudure.

11. Procédé d'inspection de soudure selon la revendication 10, dans lequel la détermination comprend la détermination que le défaut interne est généré dans la soudure lorsqu'un degré d'atténuation de l'intensité de l'onde ultrasonore détectée avec le laser de détection et l'interféromètre laser dépasse un seuil.
